**Europäisches Patentamt**

(19) **European Patent Office**

**Office européen des brevets**

(11) Publication number: **0 083 875**
**B1**

(12) **EUROPEAN PATENT SPECIFICATION**

(45) Date of publication of patent specification: **10.09.86**

(21) Application number: **82307015.6**

(22) Date of filing: **31.12.82**

(51) Int. Cl.⁴: **C 10 G 35/09** // B01J23/42

(54) **Process for catalytic reforming of naphtha using platinum and rhenium catalyst.**

(30) Priority: **31.12.81 US 336495**
**18.08.82 US 409073**

(43) Date of publication of application:
**20.07.83 Bulletin 83/29**

(45) Publication of the grant of the patent:
**10.09.86 Bulletin 86/37**

(84) Designated Contracting States:
**DE FR GB IT NL**

(56) References cited:
**GB-A-2 018 278**
**US-A-3 875 047**
**US-A-4 261 811**
**US-A-4 319 984**

(73) Proprietor: **Exxon Research and Engineering Company**
**P.O.Box 390 180 Park Avenue**
**Florham Park New Jersey 07932 (US)**

(72) Inventor: **Winter, William Edward**
**1026 Marc Antony Drive**
**Baton Rouge Louisiana 70816 (US)**
Inventor: **Markley, Gerald Edward**
**11888 Longridge No. 2138**
**Baton Rouge Louisiana 70816 (US)**

(74) Representative: **Somers, Harold Arnold et al**
**ESSO Engineering (Europe) Ltd. Patents & Licences Apex Tower High Street**
**New Malden Surrey KT3 4DJ (GB)**

Courier Press, Leamington Spa, England.

**0 083 875**

**Description**

Background of the invention and prior art

Catalytic reforming, or hydroforming, is a well established industrial process employed by the petroleum industry for improving the octane quality of naphthas or straight run gasolines. In reforming, a multi-functional catalyst is employed which contains a metal hydrogenation-dehydrogenation (hydrogen transfer) component, or components, substantially atomically dispersed upon the surface of a porous, inorganic oxide support, notably alumina. Noble metal catalysts, notably of the platinum type, are currently employed, reforming being defined as the total effect of the molecular changes, or hydrocarbon reactions, produced by dehydrogenation of cyclohexanes and dehydro-isomerization of alkylcyclopentanes to yield aromatics; dehydrogenation of paraffins to yield olefins; dehydrocyclization of paraffins and olefins to yield aromatics; isomerization of n-paraffins; isomerization of alkylcyclo paraffins to yield cyclohexanes; isomerization of substituted aromatics; and hydrocracking of paraffins which produces gas, and inevitably coke, the latter being deposited on the catalyst.

Platinum has been widely commercially used in recent years in the production of reforming catalysts, and platinum-on-alumina catalysts have been commercially employed in refineries for the last few decades. In the last decade, additional metallic components have been added to platinum as promotors to further improve the activity or selectivity, or both, of the basic platinum catalyst, e.g., iridium, rhenium, tin, and the like. Some catalysts possess superior activity, or selectivity or both, as contrasted with other catalysts. Platinum-rhenium catalysts by way of example possess admirable selectivity as contrasted with platinum catalysts, selectivity being defined as the ability of the catalyst to produce high yields of $C_5^+$ liquid products with concurrent low production of normally gaseous hydrocarbons, i.e., methane and other gaseous hydrocarbons, and coke.

In a conventional process, a series of reactors constitute the heart of the reforming unit. Each reforming reactor is generally provided with fixed beds of the catalyst which receive downflow feed, and each is provided with a preheater or interstage heater, because the reactions which take place are endothermic. A naphtha feed, with hydrogen, or recycle gas, is concurrently passed through a preheat furnace and reactor, and then in sequence through subsequent interstage heaters and reactors of the series. The product from the last reactor is separated into a liquid fraction, and a vaporous effluent. The latter is a gas rich in hydrogen, and usually contains small amounts of normally gaseous hydrocarbons, from which hydrogen is separated and recycled to the process to minimize coke production.

The activity of the catalyst gradually declines due to the buildup of coke. Coke formation is believed to result from the deposition of coke precursors such as anthracene, coronene, ovalene and other condensed ring aromatic molecules on the catalyst, these polymerizing to form coke. During operation, the temperature of the process is gradually raised to compensate for the activity loss caused by the coke deposition. Eventually, however, economics dictate the necessity of reactivating the catalyst. Consequently, in all processes of this type the catalyst must necessarily be periodically regenerated by burning off the coke at controlled conditions.

Two major types of reforming are broadly practiced in the multi reactor units, both of which necessitate periodic reactivation of the catalyst, the initial sequence of which requires regeneration, i.e., burning the coke from the catalyst. Reactivation of the catalyst is then completed in a sequence of steps wherein the agglomerated metal hydrogenation-dehydrogenation components are atomically redispersed. In the semi-regenerative process, a process of the first type, the entire unit is operated by gradually and progressively increasing the temperature to maintain the activity of the catalyst caused by the coke deposition, until finally the entire unit is shut down for regeneration, and reactivation, of the catalyst. In this type of operation, the reactors remain on stream for very long periods prior to catalyst regeneration, and reactivation, usually several hundred hours or more, e.g., at least about 700 hours, more often 2200 hours, or more. In the second, or cyclic type of process, the reactors are individually isolated, or in effect swung out of line by various manifolding arrangements, motor operated valving and the like. The catalyst is regenerated to remove the coke deposits, and then reactivated while the other reactors of the series remain on stream. A "swing reactor" temporarily replaces a reactor which is removed from the series for regeneration and reactivation of the catalyst, until it is put back in series. Whereas the individual reactors remain on stream for periods of different length depending on their position in the series, rarely if ever do any remain on stream for as long as 200 hours prior to catalyst regeneration, and reactivation. In some reforming units, features of the semi-regenerative operation are found in conjunction with cyclic operations. These operations, termed "semi-cyclic", also necessitate that some of the reactors remain on-oil for long periods, typically from 700 hours to 1400 hours, prior to regeneration and reactivation of the catalyst.

Various improvements have been made in such processes to improve the performance of reforming catalysts in order to reduce capital investment or improve $C_5^+$ liquid yields while improving the octane quality of naphthas and straight run gasolines. New catalysts have been developed, old catalysts have been modified, and process conditions have been altered in attempts to optimize the catalytic contribution of each charge of catalyst relative to a selected performance objective. Nonetheless, while any good commercial reforming catalyst must possess good activity, activity maintenance and selectivity to some degree, no catalyst can possess even one, much less all of these properties to the ultimate degree. Thus,

2

one catalyst may possess relatively high activity, and relatively low selectivity and vice versa. Another may possess good selectivity, but its selectivity may be relatively low as regards another catalyst. Platinum-rhenium catalysts, among the handful of successful commercially known catalysts, maintain a rank of eminence as regards their selectivity; and they have good activity. Nonetheless, the existing world-wide shortage in the supply of high octane naphtha persists and there is little likelihood that this shortage will soon be in balance with demand. Consequently, a relatively small increase in the $C_5^+$ liquid yield can represent a large credit in a commercial reforming operation.

Variations have been made in the amount, and kinds of catalyst charged to the different reforming reactors of a series to modify or change the nature of the product, or to improve $C_5^+$ liquid yield. Different catalysts, with differing catalytic metal components, have also been used in the different reactors of a series. The concentrations of the catalytic metal components on catalysts containing qualitatively the same metals have also been varied to provide progressively increasing, or decreasing, catalytic metals distributions. For example, it is known that the ratio and proportion of rhenium relative to platinum can be modified on the catalysts dispersed between the several reactors of a series to provide admirably high stability credits and higher conversions of the product to $C_5^+$ liquid naphthas. In accordance with the process, a series of reactors, each contains a bed, or beds, of a platinum-rhenium catalyst. The catalysts in the lead reactors are constituted of supported platinum and may contain relatively low concentrations of rhenium, with the catalyst in the last reactor of the series being constituted of platinum and a relatively high concentration of rhenium, the amount of rhenium relative to the platinum in the last reactor being present in an atomic ratio of at least 1.5:1 and higher, or preferably 2:1, and higher. In its preferred aspects, the lead reactors of the series are provided with platinum-rhenium catalysts wherein the atomic ratio of the rhenium:platinum ranges from 0.1:1 to about 1:1, preferably from 0.3:1 to 1:1, and the last reactor of the series is provided with a platinum-rhenium catalyst wherein the atomic ratio of the rhenium:platinum ranges from 1.5:1 to 3:1, or preferably from 2:1 to 3:1.

It is also known, that the amount of coke produced in an operating run increased progressively from a leading reactor to a subsequent reactor, or from the first reactor to the last reactor of the series as a consequence of the different types of reactions that predominate in the several different reactors. It is also generally known that the increased levels of coke in the several reactors of the series caused considerable deactivation of the catalysts. Whereas the relationship between coke formation, and rhenium promotion to increase catalyst selectivity was not, and is not, known with any degree of certainty because of the extreme complexity of these reactions, it was, and is believed that the presence of the rhenium minimizes the adverse consequences of the increased coke levels, albeit it does not appear to minimize coke formation in any absolute sense. Accordingly, it is further known that the concentration of the rhenium can be progressively increased in those reactors where coke formation is the greatest, but most particularly in the last reactor of the series. Moreover, in one of the forms, the catalysts within the series of reactors are progressively staged with respect to the rhenium concentration, the rhenium concentration being increased from the first to the last reactor of the series such that the rhenium content of the platinum-rhenium catalysts is varied significantly to counteract the normal effects of coking.

U.S. Patent US—A—4261811 discloses, inter alia, a reforming process performed on either virgin naphtha or a partially-reformed hydrocarbon feedstock in four reforming reactors connected in series. The first two reactors (i.e. the two upstream reactors) of the series each contain a catalyst consisting of 0.05 to 1.0 weight percent platinum, 0.1 to 1.0 weight percent halogen and the balance being alumina, and the last two reactors (i.e. the two downstream reactors) each contain a catalyst consisting of 0.05 to 1.0 weight percent platinum, 0.03 to 1.0 weight percent rhenium, 0.05 to 1.0 weight percent palladium, 0.1 to 1.0 weight percent halogen, the balance being alumina or some other refractory inorganic oxide. The patent does not disclose the proportion by weight of the rhenium-containing catalyst in the last two reactors relative to the total weight of catalyst in the four reactors of the reforming unit, and in all four examples given in the patent, the rhenium-platinum-palladium catalysts all have rhenium to platinum weight ratios of 1.0 to 1.0 (i.e. atomic weight ratios of 0.0954 to 1). The patent does not disclose or suggest that catalysts having Re to Pt weight ratios higher than 1.0 to 1.0 should be used in order to secure any benefit or advantage and, indeed, the disclosure as a whole suggests that a Re to Pt weight ratio of 1.0 to 1.0 is the correct ratio to employ. The alleged inventive feature of US—A—4261811 is the provision of palladium in a platinum-rhenium reforming catalyst, so that the relative proportions of the rhenium and platinum components of the catalyst, and the relative dispositions of rhenium and platinum components in the reactors of the reforming unit, are all somewhat immaterial in the overall context of the patent.

UK published Patent Application GB—A—2060682 describes and claims a process for improving the octane quality of a naphtha in a reforming unit comprised of a plurality of serially connected reactors, inclusive of a lead reactor, a tail reactor and optionally one or more reactors intermediate the lead reactor and the tail reactor, each of which contains a platinum-rhenium catalyst, the naphtha flowing in sequence from one reactor of the series to another and contacting the catalyst at reforming conditions in the presence of hydrogen, in which the catalyst of the tail reactor comprises a major concentration of rhenium relative to the concentration of the platinum, as contrasted with the concentrations of rhenium and platinum of the catalyst contained in the other reactors, the atomic ratio of rhenium:platinum of the catalyst in the tail reactor being maintained at least at 1.5:1, while maintaining a minor concentration of rhenium, or no more than an equal amount of rhenium, relative to the platinum of the catalyst in the other reactors.

3

These variations and modifications of reforming processes, have generally resulted in improving the process with respect to one or other selected performance objective and this is particularly so with respect to increased process stability, and increased $C_5^+$ liquid yields.

It is, nonetheless, an objective of this invention to provide a further improved process, particularly a process capable of achieving yet higher conversions of feed naphthas to $C_5^+$ liquids, especially at high severities, as contrasted with prior art processes.

This objective and others are achieved in accordance with the present invention which provides a process for reforming a naphtha feed in the presence of hydrogen in a reforming unit which is operated in a semi-regenerative, cyclic or semi-cyclic operating mode, the reforming unit having at least one catalyst-containing on-stream reactor through which the naphtha and hydrogen are flowed in contact with catalyst at reforming conditions and wherein the most rearward (downstream) reaction zone of the reactor or reforming unit contains a rhenium-promoted platinum catalyst having a weight ratio of rhenium to platinum of at least 1.5 to 1 and the most forward (upstream) reaction zone of the reactor or reforming unit contains a platinum catalyst or rhenium-promoted platinum having a weight ratio of 1 to 1 or less, characterized by concentrating within at least the most rearward (downstream) reaction zone of the reactor or reforming unit at least 40 weight percent, based on the total weight of catalyst in said reactor or reforming unit, of the rhenium-promoted platinum catalyst having a weight ratio of rhenium to platinum of at least 1.5 to 1, subject to a maximum of 90 weight percent of said catalyst when the reforming unit is operated in a semi-regenerative mode, and concentrating within the remaining most forward (upstream) reaction zone of the reactor or reforming unit, the platinum catalyst or rhenium-promoted platinum catalyst which contains rhenium in a concentration providing a weight ratio of rhenium to platinum of up to 1 to 1.

Thus, the present invention embodies a process of operating a reforming unit wherein, in a series of reactors (reaction zones) each of which contains a bed, or beds, of reforming catalyst over which a naphtha feed, inclusive of a highly paraffinic naphtha feed, is passed thereover at reforming conditions, a major quantity of the total catalyst charged to the reactors is constituted of a high rhenium platinum catalyst, or rhenium promoted platinum catalyst wherein the rhenium is present relative to the platinum in a weight concentration of at least 1.5:1, and higher, and preferably from about 2:1, and higher, and concentrated within the most rearward reactors (or reaction zones) of the series. The catalyst bed, or beds, of the forwardmost reactor (reaction zone), or reactors (reaction zones), of the series contains a platinum catalyst, or catalytic metal promoted platinum catalyst, suitably a low rhenium, rhenium promoted platinum catalyst, or catalyst which contains rhenium in concentration providing a weight ratio of rhenium:platinum of up to 1:1.

In all of its aspects, the forwardmost reactor (reaction zone), or reactors (reaction zones), of the reforming unit contains at least about 10 weight percent of an unpromoted platinum catalyst, or catalytic metal promoted platinum catalyst, suitably a low rhenium, rhenium promoted platinum catalyst, with the remainder of the catalyst of the unit being constituted of a high rhenium, rhenium promoted platinum catalyst. Conversely, the rearwardmost reactor, or reactors, of the reforming unit will contain at least 40 percent and preferably at least 50 percent, preferably from 50 percent to about 90 percent of the total weight of catalyst charge in the reactors, as a high rhenium, rhenium promoted platinum catalyst. It has been found that this optimum fraction of the total catalyst weight as unpromoted platinum catalyst, or low rhenium, rhenium promoted platinum catalyst contained in the forwardmost reactor, or reactors, of the unit is a function of operating conditions, especially as relates to reactor pressure and recycle gas rate. These catalyst combinations will provide, over the total length of an operating run, maximum catalyst activity and $C_5^+$ liquid yield at good product octane levels.

It was previously known that staging rhenium promoted platinum catalysts in the several reactors of a reforming unit based on rhenium concentration, particularly the placement of high rhenium, rhenium promoted platinum catalysts in the final reactor of a series, provided increased activity and yield credits relative to the use of the more conventional rhenium stabilized platinum catalyst. Quite surprisingly, however, it has now been found that yet considerably higher activity and yield credits can be obtained by the more extensive use of a high rhenium, rhenium promoted platinum catalyst wherein, in such operation, the high rhenium, rhenium promoted platinum catalyst constitutes at least 40 percent and preferably one-half, and most preferably from 50 percent to about 90 percent, of the total catalyst charged to the several reactors of a reforming unit, and the catalyst is concentrated within at least the final reactors, or reaction zones, of the series. Conversely, it is found that at least about 10 percent of the forewardmost reactor volume must contain a platinum, or low rhenium platinum-rhenium, catalyst; this being the reactor or reaction zone wherein naphthene dehydrogenation is the principal reaction. It is found, e.g., that using a high rhenium, platinum-rhenium catalyst in the final and intermediate reaction zones, wherein said high rhenium, platinum-rhenium catalysts constitutes at least 40 percent and preferably at least about 50 weight percent of the total catalyst charge, there is obtained higher activity and $C_5^+$ liquid yields than is obtained when using catalyst systems where the high rhenium catalysts constitutes less than 40 percent of total catalyst charge. Whereas the reasons for these advantages are not clear, general observations and conclusions can be made. Thus it is known that dehydrocyclization and cracking of lower molecular weight paraffins, i.e. $C_6$ and $C_7$ paraffins, are the predominant reactions in the last reactor or last reaction zones of a series. These reactions require high severity conditions, and the reactions proceed faster with metal promoted platinum catalysts, especially high rhenium, platinum rhenium catalysts. More importantly, selectivity for light paraffin dehydrocyclization, as opposed to cracking, is increased by use of a high rhenium, platinum rhenium catalyst in the final reaction zone, this resulting in higher $C_5^+$ liquid yields. Moreover, it is known that naphthene dehydrogenation is the predominant reaction in the lead reaction zone. These reactions, because such reactions are quite rapid even at moderate or high severities, occur readily even at lower severities where paraffins react more slowly. The lead reaction zone typically constitutes about 10 percent of the total of the reaction zones.

In the intermediate reaction zones, at intermediate severities, higher molecular weight paraffins, i.e., $C_8$, $C_9$, $C_{10}$, and $C_{10}^+$ paraffins, undergo dehydrocyclization and cracking reactions. While much slower than naphthene dehydrogenation reactions, these higher molecular weight paraffins are considerably more reactive than the $C_6$ and $C_7$ paraffins.

It is found that the use of a high rhenium, platinum rhenium catalyst in the lead reaction zone causes significant cracking of higher molecular weight paraffins as well as naphthene dehydrogenation; but entirely too much paraffin cracking. However, the use of a high rhenium, platinum rhenium catalyst in the intermediate, as well as the final reaction zones improves yields. It is surprising that the use of a high rhenium, platinum-rhenium catalyst in the lead reaction zone, which constitutes a relatively small volume relative to the total of the reaction zones, results in excessive cracking of higher molecular weight paraffins whereas, in contrast, the use of the same catalyst in the intermediate reaction zone, which constitutes a considerably larger volume of the total of the reaction zones (perhaps about 40 percent) results in less cracking and better dehydrocyclization activity for the same paraffins. Hence, the finding that the use of a platinum catalyst, or low rhenium, platinum-rhenium catalyst in the lead reaction zone where principally naphthene dehydrogenation is the predominant reaction, and the use in all subsequent reaction zones of a high rhenium, platinum-rhenium catalyst can yield further benefits over those earlier disclosed is surprising. In accordance with this invention, all of the several reactors (or reaction zones) of the unit are operated at temperatures ranging from 850°F (454.4°C) to 950°F (510.0°C). (Equivalent Isothermal Temperature, E.I.T.), preferably from 900°F (482.2°C) to 930°F (498.9°C) E.I.T., at gauge pressures ranging from 150 psig (1034 kPa) to 350 psig (2413 kPa), preferably from 175 psig (1207 kPa) to 275 psig (1896 kPa), and most preferably at 230 psig (1586 kPa), while the gas rate is maintained at from 2500 to 4500 SCF/B (445.2 to 801.4 liters $H_2$ per liter oil), preferably from 3000 to 4000 SCF/B (534.3 to 712.4 liters per liter oil). Optimum yield credits for the staged rhenium system of this invention, it is found, are obtained by operating at severities which will provide a run length of at least 700 hours, and preferably a cycle length ranging from 700 hours to 2750 hours. Yield credits for the staged rhenium system of this invention are smaller at severities which result in cycle lengths less than 700 hours or more than 2750 hours.

In its preferred aspects, the forwardmost reactor (reaction zone) of the reforming unit can contain up to about 20 weight percent, and preferably at least about 10 weight percent, of an unpromoted platinum catalyst, or a low rhenium, rhenium promoted platinum catalyst, with the remainder of the catalyst of the unit being constituted of a high rhenium, rhenium promoted platinum catalyst. Conversely, the rearwardmost reactor, or reactors, of the reforming unit will contain at least 50 percent, preferably from 50 percent to about 90 percent of the total weight of catalyst charge in the reactors, as a high rhenium, rhenium promoted platinum catalyst. It has been found, with such loadings of high rhenium, platinum rhenium catalysts, that catalyst stability, catalyst activity, and $C_5^+$ liquid yield are a function of operating conditions, especially as relates to reactor pressure and recycle gas rate. These operating conditions with such catalyst loadings will provide, over the total length of an operating run, maximum catalyst stability, catalyst activity and $C_5^+$ liquid yield at good product octane levels.

It was known that staging rhenium promoted platinum catalysts in the several reactors of a reforming unit based on rhenium concentration, particularly the placement of high rhenium, rhenium promoted platinum catalysts in the final reactor of a series, which represents a maximum of 30 to 40 percent concentration of the high rhenium, platinum rhenium catalyst within the total reactor space, provided increased catalyst activity and yield credits relative to the use of the more conventional rhenium stabilized platinum catalyst in the several reactors of the unit. Then, quite surprisingly, we found and disclosed herein that yet considerably higher catalyst activity and yield credits could be obtained by the more extensive use, in a moderately severe semi-regenerative or semi-cyclic reforming operation, of a high rhenium, rhenium promoted platinum catalyst, i.e., one wherein the high rhenium, rhenium promoted platinum catalyst constituted at least about 30 percent, and preferably from about 50 percent to about 90 percent, of the total catalyst charged to the several reactors of a reforming unit, said catalyst being concentrated within at least the final reactors, or reaction zones, of the series. It was found, e.g., that the yield credit was increased from about 0.5 to 1 liquid volume percent (LV%) to about 2 or 3 LV% in a moderate severity semi-regenerative reforming operation, as contrasted with a similar operation at higher severity such as is typical in cyclic operations. Thus, the use of a high rhenium, rhenium promoted platinum catalyst in the final reactor of a series of reactors as previously employed in a cyclic reforming operation provided yield credits of at least about 0.5 to LV%, as contrasted with conventional operations which utilized platinum-rhenium catalysts having a weight ratio of rhenium:platinum of 1:1, or less, in all of the reactors of a unit. Now, we have found that yields in semi-regenerative operations could be further significantly improved by charging at least 30 percent of the total reactor space with high rhenium, rhenium promoted platinum catalyst. Catalyst stability, catalyst activity, and $C_5^+$ liquid yield credits for staged rhenium systems in moderately severe semi-regen or semi-cyclic conditions are quite surprisingly much higher, i.e., 2—3 LV%, than in either lower

5

severity semi-regen or higher severity cyclic conditions. Albeit the reasons for these advantages are not understood, certain observations and conclusions can be made.

Rhenium reduces the adverse affects of coke on the catalyst particularly, it is believed, as relates to the use of high concentrations of rhenium relative to the platinum hydrogenation-dehydrogenation component. The rate of coke build-up on the catalyst increases with increasing temperature, reduced hydrogen pressure, and increased oil partial pressure. Conversely, the rate of coke build-up, or catalyst deactivation, is slowest at high pressure semi-regenerative conditions, high pressure/high recycle gas rates, and low temperatures. The rate of coke build-up therefore is most rapid at cyclic reforming conditions which requires low pressures, low gas rates and high temperatures. Intermediate severity "semi-cyclic" operations typically combine the low pressures and gas rates of cyclic operations with the lower temperatures of semi-regen operations and hence the coke effect in semi-cyclic operations is intermediate those of semi-regenerative and cyclic operations. It is thus postulated in accordance with this invention that the nature of coke and its effect on catalyst selectivity is affected by process conditions. Yield credits for the high rhenium, platinum rhenium catalysts at intermediate severities ("semi-cyclic" or low pressure semi-regenerative conditions) are higher than those credits obtained with the same catalysts at low severity semi-regenerative conditions because increased coking rates occur at semi-cyclic conditions. However, as severity is increased further as in moving from semi-cyclic to cyclic conditions, coke properties change in such a way that the yield credits for high-rhenium catalysts are reduced.

It was previously shown that yield and activity credits could be obtained by charging the final reactor of a multi reactor reforming unit with a high rhenium, rhenium promoted platinum catalyst, and the lead and intermediate reactors with a more conventional platinum-rhenium catalyst wherein the rhenium:platinum weight ratio of the catalyst approximated 1:1. These credits were demonstrated at relatively low pressure cyclic conditions (175 psig) (1207 kPa gauge), 3000 SCF/B (534 liters $H_2$/liter oil), 950°F (510°C) E.I.T.), relatively high pressure semi-regenerative conditions (400 psig) (2758 kPa gauge), 6000 SCF/B (1069 liters $H_2$/liter oil), around 900°F (482.2°C) start-of-run (SOR) temperature) and relatively high pressure "semi-cyclic" conditions (425 psig (2930 kPa gauge), 2500 SCF/B (445 liters $H_2$/liter oil), approximately 900°F (482.2°C) SOR temperature). In each case these credits were about +0.5 to +1 LV% $C_5^-$ liquid yield and +5 to 15% initial activity for staged systems comprising 30—40% of a high rhenium, platinum rhenium catalyst in the final reactor of the series, as contrasted with a conventional operation. We have now shown that yield credits could then be further improved, i.e., by an additional 0.5 to 1 LV% $C_5^-$ liquid yield, with further increased catalyst activity in operations wherein the concentration of high rhenium, platinum rhenium catalyst were further increased to at least 40 percent and preferably to at least 50 percent, or 50 percent to 90 percent based on the total catalyst charged to the reforming unit. We have further found that these credits can be further increased, in fact essentially doubled over those presented in the previous disclosures by operation at low pressure, semi-regenerative or semi-cyclic conditions, while retaining the high concentration of high rhenium, platinum rhenium catalysts within the rearwardmost reactors of the unit.

The following data, presented by way of comparison, is demonstrative of the activity and yield advantages obtained at high severity cyclic conditions by the use of a high rhenium platinum-rhenium catalyst in the tail reactor of a multiple reactor unit reformer, with a low rhenium, platinum-rhenium catalyst in the several lead reactors, to wit:

Demonstrations (I)

A series of platinum-rhenium catalysts of high rhenium content were prepared for demonstrative purposes from portions of particulate alumina of the type conventionally used in the manufacture of commercial reforming catalysts. These portions of alumina, i.e., 1/16 inch (1.59 mm) diameter extrudates, were calcined for 3 hours at 1000°F (537.8°C) followed by equilibration with water vapor for 16 hours. Impregnation of metals upon the supports in each instance was achieved by adding $H_2PtCl_6$, $HReO_4$, and HCl in aqueous solution, while carbon dioxide was added as an impregnation aid. After a two hour equilibration, a mixture was dried, and then placed in a vacuum oven at 150°C for a 16 hour period.

Prior to naphtha reforming, the catalyst was heated to 950°F (510°C) in 6% $O_2$ (94% $N_2$), and then soaked in $Cl_2/O_2$ (500 ppm $Cl_2$, 6% $O_2$, 5000 ppm $H_2$) for one hour. Following 3 hours in 6% $O_2$ at 950°F (510°C), the catalyst was cooled to 850°F (454.4°C), reduced with 1.5% $H_2$ in $N_2$, and then presulfided with $H_2S$ in this reducing gas to achieve the desired catalyst sulfur level.

A low rhenium, rhenium promoted platinum catalyst was employed in the forward reactor, or reactors of a unit. This catalyst, which contained rhenium:platinum in weight ratio of 1:1, was obtained already made from a catalyst manufacturer. However, this catalyst was made, and prepared in similar manner with the high rhenium, rhenium-promoted platinum catalysts.

Inspections on the feed employed in the tests (Feedstocks A and B) are given in Table I.

6

TABLE I

| ASTMD Distillation | Feedstock A Lt. Arabian virgin naphtha | | Feedstock B Persian Gulf paraffinic naphtha | | Feedstock C Arabian virgin light paraffinic naphtha | |
|---|---|---|---|---|---|---|
| API Gravity | 59.7 | | 58.9 | | 59.7 | |
| Sulfur, wppm | 0.5 | | 0.5 | | 0.5 | |
| Nitrogen, wppm | 0.1 | | 0.1 | | 0.1 | |
| | °F | °C | °F | °C | °F | °C |
| IBP | 180 | 82.2 | 166 | 74.4 | 181 | 82.8 |
| 5% | 213 | 100.6 | 203 | 95.0 | 196 | 91.1 |
| 10 | 219 | 103.9 | 214 | 101.1 | 204 | 95.6 |
| 20 | 232 | 111.1 | 227 | 108.3 | 211 | 99.4 |
| 30 | 242 | 116.7 | 239 | 115.0 | 218 | 103.3 |
| 40 | 255 | 123.9 | 253 | 122.8 | 229 | 109.4 |
| 50 | 267 | 130.6 | 269 | 131.7 | 241 | 116.1 |
| 60 | 278 | 136.7 | 283 | 139.4 | 253 | 122.8 |
| 70 | 294 | 145.6 | 299 | 148.3 | 269 | 131.7 |
| 80 | 308 | 153.3 | 315 | 157.2 | 287 | 141.7 |
| 90 | 324 | 162.2 | 333 | 167.2 | 310 | 154.4 |
| 95 | 336 | 168.9 | 346 | 174.4 | 328 | 164.4 |
| FBP | 382 | 194.4 | 358 | 181.1 | 350 | 176.7 |

In a first cyclic simulation reforming run (Run 1), at high severity cyclic conditions, a high rhenium, platinum-rhenium catalyst containing 0.3% Pt/0.67% Re/1.1% Cl$_2$/0.15% S was used in all of the several reactors of a four reactor unit, and it was prepared as previously described. In a second run (Run 2) all of the reactors of the series were provided with low rhenium catalysts containing 0.3% Pt/0.3% Re/1.1% Cl$_2$/0.15% S. The runs were conducted by passing the Light Arabian paraffinic naphtha through the series of reactors at 950°F (510°C) E.I.T., 175 psig (1207 kPa gauge), 3000 SCF/B (534 liters H$_2$/liter oil) which are the conditions necessary to produce a 102.0 RONC product. The results of these runs are given in Table II.

A third run (Run 3) was conducted under similar conditions with the same feed except that the three lead reactors were charged with the low rhenium catalysts, and the tail reactor only was charged with the high rhenium catalyst (28 wt.% of the total catalyst charge). The results are given in Table II.

In a fourth run (Run 4), a dry, calcined catalyst containing 0.29% Pt/0.72% Re/1.1% Cl$_2$/0.14% S was charged to the fourth, or tail reactor of a unit, and the first three reactors were charged with the low rhenium catalyst. This run was conducted with a more difficult to reform Persian Gulf Paraffinic naphtha at 950°F (510°C) E.I.T., 175 psig (1207 kPa gauge), 3000 SCF/B (534 liters H$_2$/liter oil), at space velocity sufficient to produce a 100 RON product.

A fifth run (Run 5) conducted at identical conditions to those used in Run 4, but with low rhenium catalyst in all four of the reactors. This run, which should be compared with Run 4 is also given in Table II.

A series of additional runs, i.e., Runs 6, 7, and 8, were made in a four reactor reforming unit, certain lead reactors, or reaction zones, being charged with the low rhenium, platinum rhenium catalyst (rhenium:platinum, 1:1) with certain of the rearwardmost reactors being charged with the high rhenium, platinum rhenium catalyst (rhenium:platinum, 2:1), reference being made to Table II which describes the percentages of each catalyst used in these runs. Feedstock C, as defined in Table I, was reformed at identical conditions to those used in Runs 4 and 5 at a space velocity sufficient to produce a 99 RON product. The results are given in Table II.

7

**0 083 875**

TABLE II

| Run No. | Catalyst | Feedstock | Catalyst activity units | Yield $C_5^+$ LV% |
|---|---|---|---|---|
| 1 | 100% High Re | A | 96 | 69.3 |
| 2 | 100% Low Re | A | 102 | 72.0 |
| 3 | 72% Low Re, 28% High Re | A | 102 | 72.5 |
| 4 | 72% Low Re, 28% High Re | B | 92 | 75.5 |
| 5 | 100% Low Re | B | 77 | 74.3 |
| 6 | 100% Low Re | C | 83 | 77.7 |
| 7 | 72% Low Re, 28% High Re | C | 101 | 77.7 |
| 8 | 44% Low Re, 56% High Re | C | 98 | 77.2 |

These data show, by comparison of Runs 1 and 2, that the use of a high rhenium, platinum rhenium catalyst produces lower catalyst activity and lower $C_5^+$ liquid yields at similar high severity cyclic conditions than the use of a low rhenium, platinum rhenium catalyst in all of the reactors of the unit. This is believed due to the "cracking out" of aromatics precursors in the lead reactors. This conclusion is supported by the 20 percent increase in light petroleum gases, principally $C_3$ and $C_4$ hydrocarbons, produced with the high rhenium catalysts.

A comparison of Run 2 and Run 3, and Run 4 with Run 5, show catalyst activity and $C_5^+$ liquid yield credits of at least 0.5 LV% for catalyst systems containing high rhenium, platinum rhenium catalysts in the rearwardmost reactors, or reaction zones, with low rhenium platinum rhenium catalysts in the forwardmost reactors, or reaction zones, as contrasted with runs made with all of the reactors containing a low rhenium, platinum catalyst. A comparison of Run 7 with Run 8 shows a 0.5 LV% $C_5^+$ liquid yield credit, and catalyst activity credit, at the high severity cyclic conditions in the use of a reactor unit containing a 28 weight percent charge of the high rhenium, platinum rhenium catalyst in the rearwardmost reactors of the unit vis-a-vis a reactor unit containing a 56 weight percent charge of the high rhenium, platinum rhenium catalyst in the rearwardmost reactors of the unit.

A comparison of Run 8 with Run 6 shows a higher catalyst activity but lower $C_5^+$ liquid yields at the severe cyclic conditions for a reforming unit containing 56 percent of the high rhenium, platinum rhenium catalyst in the rearwardmost reactors of the unit vis-a-vis a unit wherein all of the reactors of the unit are charged with a low rhenium, platinum rhenium catalyst.

In accordance with this invention, in a reforming unit employing four reactors in series, each of which contains a similar weight of catalyst, at least the two final reactors of the unit are provided with a high rhenium, rhenium promoted platinum catalyst. Thus, the more rearward reforming zones would contain at least 50 weight percent of the total catalyst charge as high rhenium, platinum-rhenium catalyst. In a reforming unit where three reactors are in series, the last reactor of the series and at least one-half of the intermediate reactor, on the downstream or product exit side, must contain a charge of high rhenium, rhenium promoted platinum catalyst; which again would provide a minimum of 50 weight percent of the total catalyst charge as high rhenium, rhenium promoted platinum catalyst. On the other hand, it would be preferable that at least the last three of the four reactors of the four reactor unit contain a high rhenium, rhenium promoted platinum catalyst; and preferably these three reactors should contain the high rhenium, platinum rhenium catalyst in an amount sufficient to provide up to 90 weight percent of the total catalyst charge as high rhenium, rhenium promoted platinum catalyst. And, it would be preferable in the three reactor unit that at least the intermediate and final reactor of the series contain a high rhenium, platinum rhenium catalyst; which would provide 66-2/3 weight percent of the total catalyst charge of the final reactors of the series as high rhenium platinum-rhenium catalyst. And more preferably, the first reactor of the three reactor unit should also contain sufficient of the high rhenium, platinum-rhenium catalyst to provide up to 90 weight percent of the total catalyst charge as high rhenium, platinum-rhenium catalyst. Conversely, a platinum catalyst, or low rhenium platinum-rhenium catalyst is charged into the first, or initial reaction zone of the series wherein the naphthene dehydrogenation reaction predominates, this being the first reactor of either the three reactor or four reactor unit. In reforming units, the first reactor of the series is provided with sufficient of the platinum, or low rhenium, platinum-rhenium catalyst to

8

promote naphthene dehydrogenation, this reactor generally containing about 10 percent, or possibly from 10 percent to 50 percent of an unpromoted platinum catalyst, or low rhenium, rhenium promoted platinum catalyst wherein the weight ratio of rhenium:platinum is about 1:1, or less. The lead reactor of a semi-regenerative reforming unit can contain 10 weight percent, or more, of the total catalyst charge of the unit as a platinum, or low rhenium, platinum-rhenium catalyst, e.g., 10 weight percent; the second reactor of the series 20 weight percent of a high rhenium, platinum-rhenium catalyst; and the third or final reactor of the series 70 weight percent of a high rhenium, platinum-rhenium catalyst. The reforming unit, ideally, will be operated, in a relative sense, at somewhat higher severity, i.e., lower pressure and gas rates than a unit charged with a lesser concentration of the high rhenium, platinum-rhenium catalyst; suitably at about 230 psig of hydrogen partial pressure, or less.

The following data, is demonstrative of the activity and $C_5^+$ liquid yield advantages achieved by our invention by concentrating within the rearwardmost reaction zone at least 40 percent, preferably from 50 percent to 90 percent, based on the total weight of catalyst in said reforming unit, of a high rhenium, rhenium platinum catalyst, while concentrating within the lead reaction zone, or reaction zone which does not contain a high rhenium, platinum rhenium catalyst, a platinum catalyst or rhenium promoted platinum catalyst which contains a weight ratio of rhenium:platinum of 1:1, or less.

Example 1

In accordance with this Example, Run 9, a light Arabian Virgin paraffinic naphtha (Feedstock C), the inspections of which are given in Table I, was reformed in a one reactor pilot plant unit in a first run with once-through pure hydrogen wherein the first 33-1/3 percent of the reactor was charged with a rhenium promoted platinum-rhenium catalyst containing rhenium:platinum in a 1:1 weight ratio, and the last, or exit side of the reactor was charged with 66-2/3 percent of a rhenium promoted, platinum-rhenium catalyst containing rhenium:platinum in an approximately 2:1 weight ratio.

In other words, the forward portion of the reaction zone contained 33-1/3 percent of the total catalyst charge to the unit as a conventional platinum-rhenium catalyst, and the rearwardmost portion of the reaction zone contained 66-2/3 percent of the total catalyst charge to the unit as a high rhenium, rhenium promoted platinum catalyst.

For purposes of comparison, another run, Run 10, was made wherein Feedstock C was reformed in a one reactor unit at similar conditions over similar catalysts except that in this instance the lead portion of the reactor was packed with two-thirds by weight of the low rhenium, platinum-rhenium catalyst and the rearward portion of the reactor with one-third by weight of the high rhenium, platinum-rhenium catalyst.

For further comparison, in Run 11 the entire reactor was 100 percent charged with the low rhenium, platinum-rhenium catalyst and Feedstock C again reformed thereover at similar conditions. No high rhenium platinum-rhenium catalyst was used in this run.

In conducting each of Runs 9, 10, and 11, supra, the reactions were each initially conducted by contacting the catalysts with the oil at 268 psig (1848 kPa gauge), 3300 SCF/B (588 liters $H_2$/liter oil), 905°F (485°C) temperature (which, in a commercial unit which uses 66% pure recycle hydrogen, is equivalent to 375 psig (2586 kPa gauge), 5000 SCF/B (890 liters $H_2$/liter oil), and 905°F (485°C)). After about 2650 hours on oil, unit conditions were shifted from 268 psig (1848 kPa gauge), 3300 SCF/B (588 liters $H_2$/liter oil) once-through $H_2$ to 173 psig (1193 kPa gauge), 2100 SCF/B (374 liters $H_2$/liter oil) once-through $H_2$, this shift accelerating the deactivation rates. (These conditions simulate commercial unit conditions of 375 psig (2586 kPa gauge), 5000 SCF/B recycle gas (890 liters gas/liter oil) and 225 psig (1551 kPa gauge), 3000 SCF/B recycle gas (534 liters gas per liter oil) respectively). After 2980 hours on oil, the conditions were shifted back to 268 psig (1848 kPa gauge), 3300 SCF/Bbl (588 liters $H_2$-containing gas/liter oil), 905°F (485°C).

The results of these runs are given in Table III. The relative activities and $C_5^-$ liquid yields for each run are given for before pressure reduction and after pressure reduction.

# 0 083 875

## TABLE III

| Catalyst | Before pressure reduction 268 psig; 3300 SCF/B; 905°F * | | After pressure reduction 268 psig; 3300 SCF/B; 905°F * | |
|---|---|---|---|---|
| | Activity | $C_5^+$ LV% | Activity | $C_5^+$ LV% |
| a) 33-1/3 Low Re, Pt-Re/66-2/3% High Re, Pt-Re | 58 | 70.7 | 35 | 68.7 |
| b) 66-2/3 Low Re, Pt-Re/33-1/3% High Re, Pt-Re | 48 | 70.9 | 30 | 67.9 |
| c) 100% Low Re, Pt-Re | 41 | 70.1 | 20 | 66.5 |

* 268 psig=1848 kPa gauge pressure. 905°F=485°C 3300 SCF/B=587.7 liters of hydrogen-containing gas per liter of oil.

The advantages demonstrate gains made in the activity and $C_5^+$ liquid volume yield in the use of a high rhenium, platinum-rhenium catalyst loaded into more than one-half of the total rearward reactor volume, with low rhenium, platinum-rhenium catalyst loaded into the forward reactor volume. It is thus clearly demonstrated that the catalyst system with 66-2/3% high rhenium, platinum-rhenium catalyst had equivalent yields and higher activity than the system with 33-1/3% high rhenium, platinum-rhenium catalyst. After the pressure reduction the run with 66-2/3% high rhenium, platinum-rhenium catalyst unquestionably showed better yields than the system with the 33-1/3% high rhenium, platinum-rhenium catalyst; and, of course, better activity and yields than the system wherein no high rhenium, platinum-rhenium catalyst was used. These results clearly indicate that the use of 50% and greater total high rhenium, platinum-rhenium catalyst charges contained in the rearwardmost portion of the total reactor space are preferred over similar runs with, e.g., 30 to 40% high rhenium, platinum-rhenium catalyst charges occupying this same reactor space.

Example 2

Additional runs using the feed, equipment, and catalysts described by reference to Example 1 were conducted at once-through $H_2$ conditions of 146 psig (1007 kPa gauge), 2400 SCF $H_2$/Bbl (427 liters $H_2$/liter oil) (equivalent to 175 psig (1207 kPa gauge), 3000 SCF $H_2$/Bbl (534 liters $H_2$/liter oil) in a recycle unit). The results of these runs, which are given in Table IV, confirmed the large activity and stability advantages of systems with greater than 50% high rhenium, platinum-rhenium loadings employed in the rearwardmost reaction zone of unit. As shown in Table IV, the superior stability of a system comprised of 66-2/3% high rhenium, platinum-rhenium catalyst resulted in a 0.8 LV% yield credit as contrasted with the 33-1/3% high rhenium, platinum-rhenium catalyst, by midrun at the severe 146 psig (1007 kPa gauge), 2400 SCF/B (427 liters $H_2$-gas per liter oil) conditions. The credit further increased to over 1.5 LV% as the runs progressed, this being indicative of the greater stability at the low pressure/low treat gas conditions. The advantages are, of course, even greater when contrasted with the run wherein the conventional platinum-rhenium catalyst is employed to the exclusion of the high rhenium, platinum-rhenium catalyst.

## TABLE IV

Midrun catalyst performance at severe 146 psig (1007 kPa gauge), 2400 SCF/Bbl (427.4 liters $H_2$-containing gas per liter oil) conditions

| | Activity | $C_5^-$ LV% yield |
|---|---|---|
| All low rhenium | 31 | 73.8 |
| 33-1/3% high rhenium | 36 | 75.0 |
| 66-2/3% high rhenium | 40 | 75.8 |

Example 3

Reference is made to the foregoing Example 1 wherein the catalyst activity and $C_5^-$ liquid volume percent yield are contrasted, with the same feed and catalyst loadings at the same conditions (i.e., 268 psig (1848 kPa gauge); 3300 SCF/B (588 liters/liter oil); 905°F (485°C)) except for passage of time. These same data are presented in Table IV, and contrasted with the even larger gains made in catalyst activity and $C_5^-$ liquid volume percent yield at higher severity conditions at the actual time of pressure reduction, or period

10

wherein the run conditions were changed from 268 psig (1848 kPa gauge), 3300 SCF/B once-through $H_2$ (587 liters $H_2$ per liter oil), 905°F (485°C) to 173 psig (1193 kPa gauge), 2100 SCF/B once-through $H_2$(374 liters $H_2$ per liter naphtha), 905°F (485°C), this period being referred to in Table IV as "During Pressure Reduction". For convenience, the run numbers are still referred to as Runs 9, 10, and 11, respectively; the only distinction between the data given in Table IV and Table III being that the results obtained "During Pressure Reduction" are given, and contrasted with the results obtained before pressure reduction and after pressure reduction.

TABLE IV

| Run No. | Catalyst | Before pressure reduction 268 psig (1848 kPa gauge); 3300 SCF/B (588 liters gas/liter oil); 905°F (485°C) | | During pressure reduction 173 psig (1193 kPa gauge); 2100 SCF/B (374 liters $H_2$ per liter oil); 905°F (485°C) | | After pressure reduction 268 psig (1848 kPa gauge); 3300 SCF/B (588 liters gas/liter oil); 905°F (485°C) | |
|---|---|---|---|---|---|---|---|
| | | Activity | $C_5^+$ LV% | Activity | $C_5^+$ LV% | Activity | $C_5^+$ LV% |
| 9 | 33-1/3 Low Re, Pt-Re/ 66-2/3% High Re, Pt-Re | 58 | 70.7 | 44 | 73.7 | 35 | 68.7 |
| 10 | 66-2/3 Low Re, Pt-Re/ 33-1/3% High Re, Pt-Re | 48 | 70.9 | 33 | 73.6 | 30 | 67.9 |
| 11 | 100% Low Re, Pt-Re | 41 | 70.1 | 31 | 70.5 | 20 | 66.5 |

0 083 875

These data clearly show considerably improved $C_5^+$ liquid yield credits for the low pressure runs made with the high rhenium staged catalyst systems, the highest $C_5^+$ liquid yield credit advantage being obtained in Run 9 wherein a full 3 LV% $C_5^+$ liquid volume percent yield advantage was obtained with 66-2/3% of high rhenium catalyst staging vis-a-vis Run 10 wherein a 2.7 LV% $C_5^+$ liquid volume percent yield advantage was obtained (73.6 $C_5^+$ LV% vs. 70.9 $C_5^+$ LV%) with 33-1/3% high rhenium catalyst staging. With all of the reactors of the unit packed with low rhenium, platinum rhenium catalyst only a small $C_5^+$ liquid yield advantage was obtained, i.e., 70.5 $C_5^+$ LV% vs. 70.1 $C_5^+$ LV%. The $C_5^+$ liquid volume percent yield credits are also apparent even when the results are compared with after reduction. The fact that $C_5^+$ liquid volume percent yield credits were reduced after the return to high pressure conditions indicates more than coke buildup was involved. The reasons are not understood, but it is apparent that staged rhenium catalyst systems operate best (relative to all low Re catalyst) at a combination of $H_2$ and oil pressures, and temperature, at low recycle/pressure conditions.

Additional Runs 12, 13, 14, and 15 using the feed, equipment, and catalysts described by reference to Runs 9, 10, and 11 were conducted at a start of run temperature of 895°F (479.4°C) at once-through $H_2$ conditions of 146 psig (1007 kPa gauge), 2400 SCF $H_2$/Bbl (427 liters $H_2$/liter oil) (equivalent to 175 psig (12.07 kPa gauge), 3000 SCF recycle gas Bbl (534 liters recycle gas per liter naphtha) in a recycle unit). The mid-run catalyst performance at these moderately severe, semi-cyclic conditions for these runs is given in Table V.

TABLE V

Mid-run catalyst performance at moderately severe semi-cyclic conditions

| Run No. | Catalyst | Activity | Yield $C_5^+$ LV% |
|---|---|---|---|
| 12 | 100% Low rhenium | 31 | 73.8 |
| 13 | 66-2/3% Low rhenium<br>33-1/3% High rhenium | 36 | 75.0 |
| 14 | 33-1/3% Low rhenium<br>66-2/3% High rhenium | 40 | 75.8 |
| 15 | 100% High rhenium | 47 | 77.0 |

These results confirm the larger yield credits seen at lower pressure/recycle rate semi-cyclic conditions (Table IV). Credits are higher than credits obtained with Feedstock C in Runs 5, 7, and 8 (very severe cyclic conditions) or those obtained at high pressure/gas rate semi-regenerative conditions.

The catalyst employed in accordance with this invention is necessarily constituted of composite particles which contain, besides a carrier or support material, a hydrogenation-dehydrogenation component, or components, a halide component and, preferably, the catalyst is sulfided. The support material is constituted of a porous, refractory inorganic oxide, particularly alumina. The support can contain, e.g., one or more of alumina, bentonite, clay, diatomaceous earth, zeolite, silica, activated carbon, magnesia, zirconia, thoria, and the like; though the most preferred support is alumina to which, if desired, can be added a suitable amount of other refractory carrier materials such as silica, zirconia, magnesia, titania, etc., usually in a range of about 1 to 20 percent, based on the weight of the support. A preferred support for the practice of the present invention is one having a surface area of more than 50 $m^2/g$, preferably from about 100 to about 300 $m^2/g$, a bulk density of about 0.3 to 1.0 g/ml, preferably about 0.4 to 0.8 g/ml, an average pore volume of about 0.2 to 1.1 ml/g, preferably about 0.3 to 0.8 ml/g, and an average pore diameter of about 30 to 300 Å ($30 \times 10^{-10}$m to $300 \times 10^{-10}$m).

The metal hydrogenation-dehydrogenation component can be composited with or otherwise intimately associated with the porous inorganic oxide support or carrier by various techniques known to the art such as ion exchange, coprecipitation with the alumina in the sol or gel form, and the like. For example, the catalyst composite can be formed by adding together suitable reagents such as a salt of platinum and ammonium hydroxide or carbonate, and a salt of aluminum such as aluminum chloride or aluminum sulfate to form aluminum hydroxide. The aluminum hydroxide containing the salts of platinum can then be heated, dried, formed into pellets or extruded, and then calcined in nitrogen or other non-agglomerating atmosphere. The metal hydrogenation components can also be added to the catalyst by impregnation, typically via an "incipient wetness" technique which requires a minimum of solution so that the total solution is adsorbed, initially or after some evaporation.

It is preferred to deposit the platinum and rhenium metals, and additional metals used as promoters, if any, on a previously pilled, pelleted, beaded, extruded, or sieved particulate support material by the impregnation method. Pursuant to the impregnation method, porous refractory inorganic oxides in dry or solvated state are contacted, either alone or admixed, or otherwise incorporated with a metal or metals-containing solution, or solutions, and thereby impregnated by either the "incipient wetness"

13

technique, or a technique embodying adsorption from a dilute or concentrated solution, or solutions, with subsequent filtration or evaporation to effect total uptake of the metallic components.

Platinum in absolute amount, is usually supported on the carrier within the range of from 0.01 to 3 percent, preferably from 0.05 to 1 percent, based on the weight of the catalyst (dry basis). Rhenium, in absolute amount, is also usually supported on the carrier in concentration ranging from 0.1 to 3 percent, preferably from 0.5 to 1 percent, based on the weight of the catalyst (dry basis). The absolute concentration of each, of course, is preselected to provide the desired weight ratio of rhenium:platinum for a respective reactor of the unit, as heretofore expressed. In the rearwardmost reactors, the rhenium is provided in major amount relative to the platinum whereas, in contrast, in the forward reactors the rhenium is provided in minor amount, or no more than about an equal amount, relative to the platinum, based on the weight of these metals, one with respect to the other. In compositing the metals with the carrier, essentially any soluble compound can be used, but a soluble compound which can be easily subjected to thermal decomposition and reduction is preferred, for example, inorganic salts such as halide, nitrate, inorganic complex compounds, or organic salts such as the complex salt of acetylacetone, amine salt, and the like. Where, e.g., platinum is to be deposited on the carrier, platinum chloride, platinum nitrate, chloroplatinic acid, ammonium chloroplatinate, potassium chloroplatinate, platinum polyamine, platinum acetylacetonate, and the like, are preferably used. A promoter metal, or metal other than platinum and rhenium, when employed, is added in concentration ranging from 0.01 to 3 percent, preferably from 0.05 to 1 percent, based on the weight of the catalyst.

To enhance catalyst performance in reforming operations, it is also required to add a halogen component to the catalysts, fluorine and chlorine being preferred halogen components. The halogen is contained on the catalyst within the range of 0.1 to 3 percent, preferably within the range of 1 to 1.5 percent, based on the weight of the catalyst. When using chlorine as a halogen component, it is added to the catalyst within the range of 0.1 to 2 percent, preferably within the range of 1 to 1.5 percent, based on the weight of the catalyst. The introduction of halogen into catalyst can be carried out by any method at any time. It can be added to the catalyst during catalyst preparation, for example, prior to, following, or simultaneously with the incorporation of the metal hydrogenation-dehydrogenation component, or components. It can also be introduced by contacting a carrier material in a vapor phase or liquid phase with a halogen compound such as hydrogen fluoride, hydrogen chloride, ammonium chloride, or the like.

The catalyst is dried by heating at a temperature above 80°F (26.7°C), preferably between about 150°F (65.6°C), in the presence of nitrogen or oxygen, or both, in an air stream or under vacuum. The catalyst is calcined at a temperature between 400°F to 1200°F (204.4 to 648.9°C), preferably 500°F to 1000°F (260 to 538°C), either in the presence of oxygen in an air stream or in the presence of an inert gas such as nitrogen.

Sulfur is a highly preferred component of the catalysts, the sulfur content of the catalyst generally ranging to 0.2 percent, preferably from 0.05 percent to 0.15 percent, based on the weight of the catalyst (dry basis). The sulfur can be added to the catalyst by conventional methods, suitably by breakthrough sulfiding of a bed of the catalyst with a sulfur-containing gaseous stream, e.g., hydrogen sulfide in hydrogen, performed at temperatures ranging from 350°F to 1050°F (177°C to 566°C) and at pressures ranging from 1 to 40 atmospheres for the time necessary to achieve breakthrough, or the desired sulfur level.

The feed or charge stock can be a virgin naphtha, cracked naphtha, a naphtha from a coal liquefaction process, a Fischer-Tropsch naphtha, or the like. Such feeds can contain sulfur or nitrogen, or both, at fairly high levels. Typical feeds are those hydrocarbons containing from 5 to 12 carbon atoms, or more preferably from 6 to 9 carbon atoms. Naphthas, or petroleum fractions boiling within the range of from 80°F (26.7°C) to 450°F (232°C), and preferably from 125°F (51.7°C) 375°F (190.6°C), contain hydrocarbons of carbon numbers within these ranges. Typical fractions thus usually contain from 15 to 80 vol.% paraffins, both normal and branched, which fall in the range of about $C_5$ to $C_{12}$, from 10 to 80 vol.% of naphthenes falling within the range of from $C_6$ to $C_{12}$, and from 5 to 20 vol.% of the desirable aromatics falling within the range of from $C_6$ to $C_{12}$.

The reforming runs are initiated by adjusting the hydrogen and feed rates, and the temperature and pressure to operating conditions. The run is continued at optimum reforming conditions by adjustment of the major process variables, within the ranges described below:

| Major operating variables | Typical process conditions | Preferred process conditions |
|---|---|---|
| Pressure, (psig) kPa gauge | (150—350) 1034—2413 | (175—275) 1207—1896 |
| Reactor temp., (°F) °C | (850—950) 454—510 | (900—930) 482—499 |
| Recycle gas rate, (SCF/B) liters gas/liter naphtha | (2500—4500) 445—801 | (3000—4000) 534—712 |
| Feed rate, W/Hr/W $(h^{-1})$ | 0.5—3 | 0.5—3 |

Having described the invention, what is claimed is:

14

**Claims**

1. A process for reforming a naphtha feed in the presence of hydrogen in a reforming unit which is operated in a semi-regenerative, cyclic or semi-cyclic operating mode, the reforming unit having at least one catalyst-containing on-stream reactor through which the naphtha and hydrogen are flowed in contact with catalyst at reforming conditions and wherein the most rearward (downstream) reaction zone of the reactor or reforming unit contains a rhenium-promoted platinum catalyst having a weight ratio of rhenium to platinum of at least 1.5 to 1 and the most forward (upstream) reaction zone of the reactor or reforming unit contains a platinum catalyst or rhenium-promoted platinum catalyst having an atomic weight ratio of rhenium to platinum of 1 to 1 or less, characterized by concentrating within at least the most rearward (downstream) reaction zone of the reactor or reforming unit at least 40 weight percent, based on the total weight of catalyst in said reactor or reforming unit, of the rhenium-promoted platinum catalyst having a weight ratio of rhenium to platinum of at least 1.5 to 1, subject to a maximum of 90 weight percent of said catalyst when the reforming unit is operated in a semi-regenerative mode, and concentrating within the remaining most forward (upstream) reaction zone of the reactor or reforming unit, the platinum catalyst or rhenium-promoted platinum catalyst which contains rhenium in a concentration providing a weight ratio of rhenium to platinum of up to 1 to 1.

2. A process according to claim 1 further characterized by concentrating within at least the most rearward (downstream) reaction zone of the said on-stream reactor or reforming unit at least 50 weight percent, based on the total weight of catalyst in the reactor or reforming unit, of the rhenium-promoted platinum catalyst having a weight ratio of rhenium to platinum of at least 1.5 to 1.

3. A process according to claim 1 or claim 2 further characterized in that the reforming unit comprises a plurality of catalyst-containing on-stream reactors connected in series, the hydrogen and naphtha being flowed from one reactor to another to contact the catalyst in each reactor at reforming conditions, at least part or some of the reaction zone(s) of the reforming unit being constituted by at least part of one or more of the catalyst-containing on-stream reactors.

4. A process according to any one of claims 1 to 3 further characterized in that the said reforming process is carried out at temperatures ranging from 454.4°C (859°F) to 510°C (950°F) (equivalent isothermal temperature, E.I.T.) at gauge pressures ranging from 1034.3 kPa (150 psig) to 1413.4 kPa (350 psig) and at gas rates ranging from 445 litres/litres feed (2500 SCF/B) to 802 litres/litre feed (4500 SCF/B).

5. A process according to any one of claims 1 to 4 further characterized in that the weight ratio of rhenium:platinum in the rhenium-promoted platinum catalyst of the most rearward (downstream) zone or reactor(s) of the series is at least 2:1.

6. A process according to any one of claims 1 to 5 further characterized in that the high rhenium, rhenium-promoted platinum catalyst charged into the reactor(s) contains from 0.01 to 3 percent platinum.

7. A process according to any one of claims 1 to 6 further characterized in that the high rhenium, rhenium-promoted platinum catalyst charged into the reactor(s) contains from 0.01 to 3 percent rhenium.

8. A process according to any one of claims 1 to 7 further characterized in that the high rhenium, rhenium-promoted platinum catalyst charged into the reactor(s) contains from 0.01 to 3 percent halogen.

9. A process according to any one of claims 1 to 8 further characterized in that the high rhenium, rhenium-promoted platinum catalyst charged into the reactor(s) is sulfided, and contains up to 0.2 percent sulfur.

**Patentansprüche**

1. Verfahren zum Reformieren eines Naphtaeinsatzmaterials in Gegenwart von Wasserstoff in einer Reformieranlage, die in semiregenerativer, cyclischer oder semicyclischer Betriebsweise betrieben wird und mindestens einen Katalysator enthaltenden im Betrieb befindlichen Reaktor aufweist, durch den Naphta und Wasserstoff im Kontakt mit dem Katalysator unter Reformierbedingungen fließen, wobei die rückwärtigste (stromabwärts) Reaktionszone des Reaktors oder der Reformieranlage einen rheniumbeschleunigten Platinkatalysator mit einem Gewichtsverhältnis von Rhenium zum Platin von mindestens 1,5:1 enthält und die vorderste (stromaufwärts) Reaktionszone des Reaktors oder der Reformieranlage einen Platinkatalysator oder rheniumbeschleunigten Platinkatalysator mit einem Gewichtsverhältnis von Rhenium zu Platin von 1:1 oder weniger enthält, dadurch gekennzeichnet, daß in der rückwärtigsten (stromabwärts) Reaktionszone des Reaktors oder der Reformieranlage mindestens 40 Gew.%, bezogen auf das Gesamtgewicht des Katalysators in dem Reaktor oder der Reformieranlage, des rheniumbeschleunigten Platinkatalysators mit einem Gewichtsverhältnis von Rhenium zu Platin von mindestens 1,5:1 konzentriert sind, wobei das Maximum 90 Gew.% des Katalysators beträgt, wenn die Reformieranlage in einer semi-regenerativen Weise betrieben wird, und daß in er verbleibende vordersten (stromaufwärts) Reaktionszone des Reaktors oder der Reformieranlage der Platinkatalysator oder der rheniumbeschleunigte Platinkatalysator konzentriert wird, der Rhenium in einer Konzentration enthält, die ein Gewichtsverhältnis von Rhenium zu Platin von bis zu 1:1 liefert.

2. Verfahren nach Anspruch 1, dadurch gekennzeichnet, daß mindestens in der rückwärtigsten (stromabwärts) Reaktionszone des in Betrieb befindlichen Reaktors oder der Reformieranlage mindestens 50 Gew.%, bezogen auf das Gesamtgewicht des Katalysators in dem Reaktor oder der Reformieranlage,

**0 083 875**

des rheniumbeschleunigten Platinkatalysators mit einem Gewichtsverhältnis von Rhenium zu Platin von mindestens 1,5:1 konzentriert sind.

3. Verfahren nach Anspruch 1 oder 2, dadurch gekennzeichnet, daß die Reformieranlage eine Vielzahl von Katalysator enthaltenden in Betrieb befindlichen Reaktoren aufweist, die in Serie geschaltet sind, Wasserstoff und Naphta von einem Reaktor zum anderen strömen, um den Katalysator in jedem Reaktor bei Reformierbedingungen zu kontaktieren, und mindestens ein Teil der Reaktionszone(n) oder einige der Reaktionszonen der Reformieranlage durch mindestens einen Teil eines oder mehrerer der katalysatorhaltigen in Betrieb befindlichen Reaktoren gebildet wird.

4. Verfahren nach einem der Ansprüche 1 bis 3, dadurch gekennzeichnet, daß das Reformierverfahren bei Temperaturen im Bereich von 454,4°C bis 510°C (äquivalente isotherme Temperatur, E.I.T.) bei Überdrücken von 1034,3 kPa bis 1413,4 kPa und Gasgeschwindigkeiten im Bereich von 445 l/l Einsatzmaterial bis 802 l/l Einsatzmaterial durchgeführt wird.

5. Verfahren nach einem der Ansprüche 1 bis 4, dadurch gekennzeichnet, daß das Gewichtsverhältnis von Rhenium zu Platin in dem rheniumbeschleunigten Platinkatalysator in der rückwärtigsten (stromabwärts) Zone oder dem rückwärtigsten Reaktor (bzw. Reaktoren) der Serie mindestens 2:1 beträgt.

6. Verfahren nach einem der Ansprüche 1 bis 5, dadurch gekennzeichnet, daß der rheniumbeschleunigte Platinkatalysator mit hohem Rheiniumgehalt, der in den (die) Reaktor (Reaktoren) eingespeist wird, 0,01 bis 3% Platin enthält.

7. Verfahren nach einem der Ansprüche 1 bis 6, dadurch gekennzeichnet, daß der rheniumbeschleunigte Platinkatalysator mit hohem Rheniumgehalt, der in den (die) Reaktor (Reaktoren) eingespeist wird, 0,01 bis 3% Rhenium enthält.

8. Verfahren nach einem der Ansprüche 1 bis 7, dadurch gekennzeichnet, daß der rheniumbeschleunigte Platinkatalysator mit hohem Rheniumgehalt, der in den (die) Reaktor (Reaktoren) eingespeist wird, 0,01 is 3% Halogen enthält.

9. Verfahren nach einem der Ansprüche 1 bis 8, dadurch gekennzeichnet, daß der rheniumbeschleunigte Platinkatalysator mit hohem Rheniumgehalt, der in den (die) Reaktor (Reaktoren) eingespeist wird, sulfidiert ist und bis zu 0,2% Schwefel enthält.

## Revendications

1. Procédé pour le reformage catalytique d'une charge de naphta en présence d'hydrogène dans une unité de reformage qui fonctionne selon un mode de fonctionnement semi-régénératif, cyclique ou semi-cyclique, l'unité de reformage ayant au moins un réacteur en circuit contenant un catalyseur à travers lequel le naphta et l'hydrogène circulent au contact du catalyseur dans des conditions de reformage et dans lequel la zone réactionnelle la plus au fond (en aval) du réacteur ou de l'unité de reformage contient un catalyseur au platine à promoteur rhénium présentant un rapport pondéral rhénium/platine d'au moins 1,5:1 et la zone réactionnelle la plus en avant (en amont) du réacteur ou de l'unité de reformage contient un catalyseur au platine ou un catalyseur au platine à promoteur rhénium présentant un rapport pondéral atomique rhénium/platine de 1:1 ou inférieur, caractérisé en ce qu'on concentre, au moins dans la zone réactionnelle la plus au fond (en aval) du réacteur ou de l'unité de reformage, au moins 40% en poids, par rapport au poids total du catalyseur dans le dit réacteur ou la dite unité de reformage, du catalyseur au platine à promoteur rhénium présentant un rapport pondéral rhénium/platine d'au moins 1,5:1, sous réserve d'un maximum de 90% en poids du dit catalyseur lorsque l'unité de reformage fonctionne dans un mode semi-régénératif, et qu'on concentre dans la zone réactionnelle la plus en avant (en amont) restante du réacteur ou de l'unité de reformage le catalyseur au platine ou le catalyseur au platine à promoteur rhénium qui contient du rhénium en concentration donnant un rapport pondéral rhénium/platine allant jusqu'à 1:1.

2. Procédé selon la revendication 1, caractérisé en outre en ce qu'on concentre, au moins dans la zone réactionnelle la plus au fond (en aval) du dit réacteur ou de la dite unité de reformage en circuit, au moins 50% en poids, par rapport au poids total du catalyseur dans le réacteur ou l'unité de reformage, du catalyseur au platine à promoteur rhénium présentant un rapport pondéral rhénium/platine d'au moins 1,5:1.

3. Procédé selon la revendication 1 ou la revendication 2, caractérisé en outre en ce que l'unité de reformage comprend une pluralité de réacteurs en circuit contenant un catalyseur reliés en série, l'hydrogène et le naphta circulant d'un réacteur à un autre pour entrer au contact du catalyseur dans chaque réacteur dans des conditions de reformage, une partie de la zone réactionnelle ou certaines zones réactionnelles au moins de l'unité de reformage étant constituée(s) par une partie au moins d'un ou plusieurs réacteurs en circuit contenant un catalyseur.

4. Procédé selon l'une quelconque des revendications 1 à 3, caractérisé en outre en ce que le dit procédé de reformage est réalisé à des températures de 454,4°C (859°F) à 510°C (950°F) (température isotherme équivalente, T.I.E.) sous des pressions manométriques de 1034,3 kPa (150 psig) à 1413,4 kPa (350 psig) et pour des débits de gaz de 445 litres/litre de charge (2500 SCF/B) à 802 litres/litre de charge (4500 SCF/B).

5. Procédé selon l'une quelconque des revendications 1 à 4, caractérisé en outre en ce que le rapport pondéral rhénium/platine dans le catalyseur au platine à promoteur rhénium de al zone la plus au fond (en aval) ou du (des) réacteur(s) de la série est d'au moins 2:1.

6. Procédé selon l'une quelconque des revendications 1 à 5, caractérisé en outre en ce que le catalyseur au platine à promoteur rhénium, de forte teneur en rhénium, chargé dans le(s) réacteur(s) contient de 0,01 à 3% de platine.

7. Procédé selon l'une quelconque des revendications 1 à 6, caractérisé en outre en ce que le catalyseur au platine à promoteur rhénium, de forte teneur en rhénium, chargé dans le(s) réacteur(s) contient de 0,01 à 3% de rhénium.

8. Procédé selon l'une quelconque des revendications 1 à 7, caractérisé en outre en ce que le catalyseur au platine à promoteur rhénium, de forte teneur en rhénium, chargé dans le(s) réacteur(s) contient de 0,01 à 3% d'halogène.

9. Procédé selon l'une quelconque des revendications 1 à 8, caractérisé en outre en ce que le catalyseur au platine à promoteur rhénium, de forte teneur en rhénium, chargé dans le(s) réacteur(s) est sulfuré et contient jusqu'à 0,2% de soufre.